# EUROPÄISCHE PATENTANMELDUNG

(11) **EP 0 621 434 A1**
(43) Veröffentlichungstag der Anmeldung: **26.10.1994**
(21) Anmeldenummer: 94105071.8
(22) Anmeldetag: 30.03.1994
(51) Int. Cl.: F16L 55/162

(54) **Vorrichtung zum Sanieren einer nichtbegehbaren Rohrleitung**

(30) Priorität: 02.04.1993 DE 9305075 U
(71) Anmelder: SIEMENS AKTIENGESELLSCHAFT, D-80333 München (DE)
(72) Erfinder: Dippold, Clemens, Dipl.-Ing., D-96049 Bamberg (DE); Forster, Josef, D-96114 Hirschaid (DE)

(57) **Zusammenfassung**

Bei einer Vorrichtung zum Sanieren einer nicht begehbaren Rohrleitung (40) mit einer Spachtelmasse trägt ein eine Spachteleinrichtung (12) enthaltender und in der Rohrleitung (40) fahrbarer Manipulator (2) einen auswechselbaren Vorratsbehälter (20) für die Spachtelmasse. Gemäß der Erfindung ist der Vorratsbehälter (20) wenigstens mittelbar an einer Stirnseite des Manipulators (2) freitragend angeordnet. Durch diese Maßnahme wird die Baulänge des Manipulators (2) verringert und eine auch bei beengten räumlichen Verhältnissen leichte Einführbarkeit in die Rohrleitung gewährleistet.

## Beschreibung

Die Erfindung bezieht sich auf eine Vorrichtung zum Sanieren einer nichtbegehbaren Rohrleitung, wie sie beispielsweise aus der europäischen Patentschrift 0 211 825 bekannt ist.

Zum Sanieren von Rissen und Vertiefungen in nichtbegehbaren Rohrleitungen ist es bekannt, ferngesteuerte Fahrzeuge einzusetzen, die eine Spachteleinrichtung bis zu einer schadhaften Stelle innerhalb der Rohrleitung transportieren. Da zwischen der schadhaften Stelle innerhalb der Rohrleitung und dem nächstliegenden nach außen führenden Rohrschacht relativ große Entfernungen liegen können, ist eine Zuführung der Spachtelmasse durch nach außen führende Leitungen nicht zweckmäßig. Durch die Länge dieser Zuführungsleitungen entsteht ein großes Totvolumen, das sowohl bei der Zuführung der Spachtelmasse als auch bei der nachträglichen Reinigung ungünstig ist.

Aus der französischen Patentschrift 1 571 793 ist eine Vorrichtung zum Sanieren einer Rohrleitung bekannt, bei der das zum Beschichten der Innenoberfläche der Rohrleitung erforderliche Material in mehreren aneinander gekuppelten fahrbaren Vorratswägen angeordnet ist. Ein aus mehreren Wägen zusammengekuppelter Verband ist jedoch für einen ferngesteuerten und mit einem Eigenantrieb versehenen Manipulator nicht geeignet, da eine Bewegung in beide Rohrrichtungen nicht ohne weiteres möglich ist.

In der Europäischen Patentschrift 0 211 825 wird deshalb zur Vermeidung dieser Probleme eine Vorrichtung zum Sanieren von Rohrleitungen vorgeschlagen, bei der ein ferngesteuertes Fahrzeug einen wegnehmbaren Behälter für das Spachtelmaterial trägt. Dadurch ist eine lange Versorgungsleitung für die Materialzufuhr nicht mehr erforderlich.

Bei der bekannten Einrichtung ist die Materialkartusche zwischen dem Fahrzeug und der Spachteleinrichtung angeordnet. Dies hat zur Folge, daß durch die Unterbringung der Materialkartusche die Baulänge des gesamten Fahrzeugs vergrößert ist. Dadurch können Probleme bei der Einführung des gesamten Manipulators in der Rohrleitung entstehen, da der Durchmesser der zu den Rohrleitungen führenden Schächte begrenzt ist, und Manipulatoren, deren Baulänge größer ist als der Durchmesser der vorhandenen Schächte nicht mehr in die von den Schächten abzweigenden Rohrleitungen eingeführt werden können.

Der Erfindung liegt nun die Aufgbe zugrunde, eine Vorrichtung zum Sanieren einer nichtbegehbaren Rohrleitung anzugeben, die trotz Mitführung eines Vorratsbehälters für eine Spachtelmasse auch bei beengten räumlichen Verhältnissen leicht in die Rohrleitung eingesetzt werden kann.

Die genannte Aufgabe wird gemäß der Erfindung gelöst mit den Merkmalen des Schutzanspruches 1. Da der auswechselbare Vorratsbehälter an einer Stirnseite des Manipulators angeordnet ist, wird durch Abnehmen des Vorratsbehälters die Baulänge des Manipulators verringert. Der Manipulator kann dann in eine von einem Rohrschacht abzweigende Rohrleitung auch unter beengten Verhältnissen eingesetzt werden und der Vorratsbehälter kann nachträglich am bereits in das Rohr eingeführten Manipulator eingehängt werden.

Weitere vorteilhafte Ausgestaltungen der Erfindung ergeben sich gemäß der Unteransprüche.

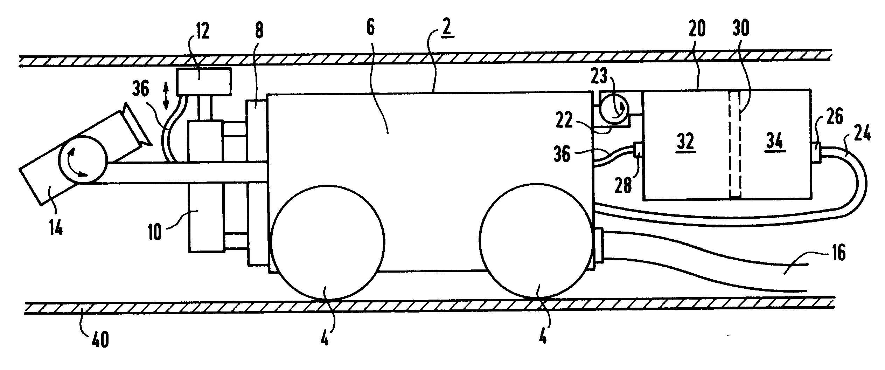

Zur weiteren Erläuterung der Erfindung wird auf die Zeichnung verwiesen, in deren einzige Figur ein Manipulator gemäß der Erfindung in einer Seitenansicht schematisch veranschaulicht ist.

Gemäß der Figur enthält eine Vorrichtung zum Sanieren einer nichtbegehbaren Rohrleitung einen Manipulator 2, der auf Rädern 4 innerhalb einer Rohrleitung 40 ferngesteuert verfahren werden kann. In einem Gehäuse 6 des Manipulators 2 ist hierzu ein in den Figur nicht sichtbarer Eigenantrieb, vorzugsweise ein hydraulischer Eigenantrieb, angeordnet. An einer Stirnseite des Gehäuses 6 ist ein Drehteller 8 drehbar angeordnet, der eine Radialzustellung 10 für eine Spachteleinrichtung 12 trägt. Der Drehteller 8 kann um die Längsachse des Manipulators 2 gedreht werden, so daß mit der Spachteleinrichtung 12 wenigstens der gesamte Innenumfang der Rohrleitung 40 durchfahren werden kann.

Die Spachteleinrichtung 12 umfaßt einen oben offenen Behälter, der beispielsweise trichterförmig oder zylindrisch sein kann und von dem aus das Spachtelmaterial auf die Innenwand der Rohrleitung aufgetragen wird. Mit der Radialzustellung 10 wird dieser Behälter an die Rohrinnenwand herangeführt. Durch eine kontinuierliche Materialzufuhr in dem Behälter wird das Spachtelmaterial auf die Rohrinnenwand aufgetragen und die an einem ersten Schritt durch die Seitenkanten des oben offenen Behälters geglättet. Zur weiteren Glättung des Spachtelmaterials kann außerdem eine in der Figur nicht sichtbare und mit dem Drehteller 8 verbundene separate Glättspachtel vorgesehen sein, die mit einer weiteren Radialzustellung ebenfalls radial an die Rohrinnenwand herangeführt werden kann.

Am Gehäuse 6 ist eine Kamera 14 schwenkbar angeordnet, mit der der Spachtelvorgang optisch überwacht werden kann. An der der Spachteleinrichtung 12 gegenüberliegenden Stirnseite des Gehäuses 6 sind mit dem Bezugszeichen 16 eine Vielzahl von Versorgungsleitungen veranschaulicht, die zur Energieversorgung des Manipulators 2 erforderlich sind. Dies sind insbesondere hydraulische Versorgungsleitungen für die Radialzustellung 10, für die Drehbewegung des Drehtellers 8 sowie für den Eigenantrieb des Manipulators 2, elektrische Versorgungsleitungen für die schwenkbare Kamera 14 sowie pneumatische Versorgungsleitungen für die Materialzufuhr in den Behälter der Spachteleinrichtung 12.

An der rückwärtigen Stirnseite des Gehäuses 6 ist außerdem ein Vorratsbehälter 20 für das Spachtelmaterial angeordnet. Der Vorratsbehälter 20 ist hierzu als Komplettbauteil in hakenförmigen Konsolen 22 an der Rückseite des Gehäuses 6 eingehängt. Durch entsprechende mechanische Anschläge ist nur eine Schwenkbewegung in Richtung des mit dem Bezugszeichen 23 versehenen Pfeiles möglich. Der gesamte Vorratsbehälter 20 ist somit freitragend und lösbar an das Gehäuse 6 angekuppelt.

Der Vorratsbehälter 20 enthält einen schwimmenden Kolben 30, der seinen Innenraum in einen die Spachtelmasse enthaltenden Raum 32 und einen mit Druckluft beaufschlagbaren Raum 34 teilt. Der Innenraum 32 ist über eine Kupplung 28 an eine flexible Schlauchleitung 36 angeschlossen, die durch das Gehäuse 6 des Manipulators 2 hindurchführt und in den Behälter der Spachteleinrichtung 12 mündet. Die zur Druckbeaufschlagung des schwimmenden Kolbens 30 erforliche Druckluft wird über an eine an der Rückseite des Vorratsbehälters 20 angeordnete Kupplung 26 anschließbare Druckluftleitung 24 aus dem Inneren des Manipulators herangeführt. Die Druckluftleitung 24 ist dabei im Inneren des Manipulators 2 an eine der dafür vorgesehenen pneumatischen Versorgungsleitung 16 angeschlossen.

Im Ausführungsbeispiel der Figur ist der Vorratsbehälter 20 zugleich als Materialkartusche ausgebildet und unmittelbar am Gehäuse 6 des Manipulators 2 angeordnet. Anstelle dieser Ausführungsform kann auch eine Anordnung vorgesehen sein, bei der der Vorratsbehälter 20 für die Spachtelmasse in einer getrennten Halterung fixiert wird, die ihrerseits an das Gehäuse 6 in der vorstehend genannten Weise angekuppelt werden kann.

## Patentansprüche

1. Vorrichtung zum Sanieren einer nichtbegehbaren Rohrleitung (40) mit einer Spachtelmasse, die in einem auswechselbaren Vorratsbehälter (20) mit einem in der Rohrleitung (40) fahrbaren und eine Spachteleinrichtung (12) enthaltenden Manipulator (2) mitgeführt wird,
**dadurch gekennzeichnet,**
daß der Vorratsbehälter (20) wenigstens mittelbar an einer Stirnseite des Manipulators (2) freitragend angeordnet ist.

2. Vorrichtung nach Anspruch 1, **dadurch gekennzeichnet,** daß der Vorratsbehälter (20) um eine senkrecht zur Längsachse des Manipulators (2) liegende Achse in einer Richtung schwenkbar angeordnet ist.

3. Vorrichtung nach Anspruch 1 oder Anspruch 2, **dadurch gekennzeichnet,** daß die Spachteleinrichtung (12) und der Vorratsbehälter (20) an einander gegenüberliegenden Stirnflächen des Manipulators (2) angeordnet sind.

4. Vorrichtung nach Anspruch 1 oder Anspruch 2, **dadurch gekennzeichnet,** daß der Vorratsbehälter (20) in Gestalt eines Komplettbauteils unmittelbar am Manipulator (2) eingehängt ist.

5. Vorrichtung nach Anspruch 3, **dadurch gekennzeichnet,** daß der Vorratsbehälter (20) lösbar mit einer zur Spachteleinrichtung (12) führenden flexiblen Schlauchleitung (36) für die Spachtelmasse verbunden ist.

6. Vorrichtung nach einem der vorhergehenden Ansprüche, **dadurch gekennzeichnet,** daß der Vorratsbehälter (20) zu seiner Entleerung lösbar an eine zum Manipulator (2) führende flexible Druckluftleitung (24) anschließbar ist.
